# EUROPEAN PATENT APPLICATION

(11) **EP 2 056 177 A2**
(43) Date of publication of application: **06.05.2009**
(21) Application number: 08152600.6
(22) Date of filing: 11.03.2008
(51) Int. Cl.: G05B 9/02

(54) **Proportional valve means and method**

(30) Priority: 12.03.2007 IT MO20070079
(71) Applicant: Aron S.p.A., 42100 Reggio Emilia (IT)
(72) Inventor: Bernardi, Matteo, 42035, Monti (RE) (IT); Bartoli, Maurizio, 42100, Reggio Emilia (IT)
(74) Representative: Crugnola, Pietro

(57) **Abstract**

Valve means comprises cursor means (6) arranged for directing suitably a flow of a fluid material, proportional magnet means (35, 35a, 35b) arranged for moving said cursor means (6), electronic control means (3) for supplying said magnet means (35, 35a, 35b), said electronic control means (3) comprising switch means (54) arranged for blocking a supply of said magnet means (35, 35a, 35b); a method for supplying magnet means, said magnet means (35, 35a, 35b) being comprised in valve means (1), comprises processing an external enabling signal, said method comprising further processing an internal enabling signal, said internal enabling signal being generated by said valve means (1).

## Description

The invention relates to directional proportional valve means, in particular a safety device and a method for ensuring the switching off of the directional proportional valve means in the event of a fault.

Proportional valves are known comprising a valve body with an elongated shape at the ends of which there are fixed one or two proportional magnets and inside which a cursor can run axially to adjust and direct a flow of oil.

The proportional magnets are commanded by a reference signal that determines a direct current with which the latter are supplied.

The proportional magnets, when supplied with the direct current, generate a thrusting force on movable elements connected to the cursor, moving the movable elements.

In this manner, by acting on the reference signal, the position of the cursor inside the valve body can be commanded to take the valve body to a desired position.

Channels are further obtained inside the valve body that, depending on the position assumed by the cursor, direct the flow of oil to a first outlet or to a second outlet.

An actual position of the cursor of the valve is detected by an inductive position transducer.

The inductive position transducer generates a feedback signal that is used to compare the actual position of the cursor with the desired position.

The operation of the proportional magnets is controlled by an enabling command generated by the operator or by the central unit.

If there is a positioning error the enabling command is deactivated, and, consequently, the dispensing of direct current to the proportional magnets is blocked so that they switch off.

The cursor is returned, by springs, to a safety position in which the flow of oil is blocked or suitably directed through the proportional valve.

In the presence of a positioning error of the cursor, an error signal is further generated.

This error signal is arranged for informing an operator assigned to operating a machine on which the valve is mounted or a central control unit of a valve fault.

For example, the operator can be informed of the fault by acoustic and/or luminous indicators.

The operator or the central control unit can simultaneously control the feedback signal of several valves.

The proportional magnets can also be switched off if they constitute, for example, problems or dangers in the operation of the machine on which the valve is fitted or faults inside the central unit that have been detected by the latter.

A drawback of known proportional valves is that in the event of a positioning error switching off of the proportional magnets is not always guaranteed.

In fact, faults may occur, generating an incorrect enabling command that enables the valve to operate instead of commanding the proportional magnets to switch off.

Such faults may arise, for example, from an error in the acquisition of the feedback signal by the central unit, or from distraction or from a fault of an operator who does not notice the error signal.

In this manner, for example, the control of machines driven by the flow of oil may be lost.

This jeopardises the proportional valve, the machines to which it is connected, the operators and structures that may be present in the vicinity of the aforesaid machines.

An object of the invention is to improve known proportional valves.

A further object of the invention is to increase the safety of the proportional valves and of the machines on which the proportional valves are installed.

In a first aspect of the invention valve means is provided comprising cursor means arranged for suitably directing a flow of a fluid material, proportional magnet means arranged for moving said cursor means, electronic control means for supplying said magnet means, characterised in that said control means comprises switch means arranged for blocking a supply of said magnet means.

In a second aspect of the invention there is provided a method for supplying magnet means, said magnet means being comprised in valve means, comprising processing an external enabling signal, characterised in that it further comprises further processing an internal enabling signal, said internal enabling command being generated by said valve means.

Owing to the present invention, supplying the magnet means is controlled simultaneously by the external enabling signal, operated, for example, by an operator or by a central electronic control unit, and by the internal enabling signal generated by the valve means.

In the event of correct operation of the valve means the internal enabling signal activates an internal enabling command for supplying the proportional magnet means.

Correct operation of the valve means is checked by feedback signals generated by the valve means.

The feedback signals are processed so as to provide the internal enabling signal.

The feedback signals are arranged to provide information on the operation of both the hardware devices and the software devices of the valve means.

If valve means operating faults are detected, for example a positioning error of the cursor means, the internal enabling signal disables the internal enabling command.

Similarly, in the event of correct operation of the valve means the external enabling signal activates an external enabling command for supplying the proportional magnet means.

If valve means operating faults are detected, the external enabling signal disables the external enabling command.

In the presence of the internal enabling command and of the external enabling command the switch means supplies the proportional magnet means.

If even just one of the two commands is deactivated, the switch means blocks the supply to the magnet means, ensuring that the valve means is switched off.

In this manner, even when an incorrect external enabling signal determines the activation of an incorrect external enabling command the magnet means is switched off and the cursor means returns to a safety position.

The aforesaid incorrect external enabling signal may be due to incorrect control of a feedback signal of the valve means, for example caused by a fault of a central electronic unit assigned to emitting an external enabling signal.

The incorrect external enabling signal may be caused by a fault or distraction of an operator who does not notice a hazardous situation due to the fault of the valve means or of an error signal indicating the fault of the valve means.

In the safety position the flow of fluid material is blocked or directly suitably so as to make safe the valve means, machines to which the latter is connected, operators and structures that may be present in the vicinity of the machines.

Owing to the present invention, the safety is thus increased of the valve means, of the machines connected to the latter, of the operators and of the structures that may be present in the vicinity of such machines.

The invention can be better understood and implemented with reference to the attached drawings that illustrate some embodiments thereof by way of non-limiting example, in which:
Figure 1 is a perspective view of valve means according to an embodiment of the invention;
Figure 2 is a partially sectioned perspective view of a proportional valve comprised in the valve means in Figure 1;
Figure 3 is a perspective bottom view of valve means in Figure 1;
Figure 4 is a partially sectioned and schematised frontal view of the proportional valve in Figure 2 in which a cursor is shown situated in a central position C;
Figure 5 is a partially sectioned and schematised frontal view of the proportional valve in Figure 2 in which the cursor is situated in a first end position;
Figure 6 is a partially sectioned and schematised frontal view of the proportional valve in Figure 2 in which the cursor is situated in a second end position;
Figure 7 is a partially sectioned and schematised frontal view of the valve means in Figure 1;
Figure 8 is a partially sectioned and schematised frontal view of valve means according to a further embodiment of the invention;
Figure 9 is a partially sectioned and schematised frontal view of valve means according to a still further embodiment of the invention;
Figure 10 is a block diagram of a basic safety procedure during a switch-on of control means;
Figure 11 is a block diagram of the basic safety procedure that is not overridable during the running of a main program;
Figure 12 is a block diagram of a first error procedure;
Figure 13 is a block diagram of a second error procedure;
Figure 14 is a block diagram of a safety procedure increased during the switch-on of the control means;
Figure 15 is a block diagram of the safety procedure increased during running of the main program;
Figure 16 is a block diagram of a third error procedure;
Figure 17 is a block diagram of a further basic safety procedure that is not overridable during the switch-on of the control means;
Figure 18 is a block diagram of the further basic safety procedure that is not overridable during running of the main program;
Figure 19 is a block diagram of a fourth error procedure;
Figure 20 is a block diagram of a further increased safety procedure during the switch-on of the control means;
Figure 21 is a block diagram of the further safety procedure increased during running of the main program;
Figure 22 is a block diagram of a fifth error procedure;
Figure 23 is a block diagram of another basic safety procedure that is not overrideable during the switch-on of the control means;
Figure 24 is a block diagram of the other basic safety procedure that is not overrideable during running of the main program;
Figure 25 is a block diagram of a sixth error procedure.

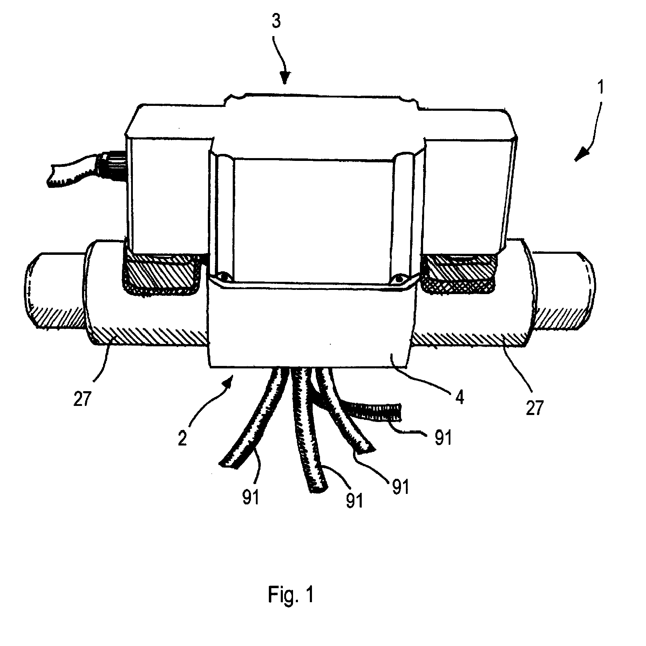

In Figure 1 there is shown an embodiment of valve means 1 according to the invention.

The valve means 1 comprises a directional proportional valve 2 and control means 3 fixed thereto.

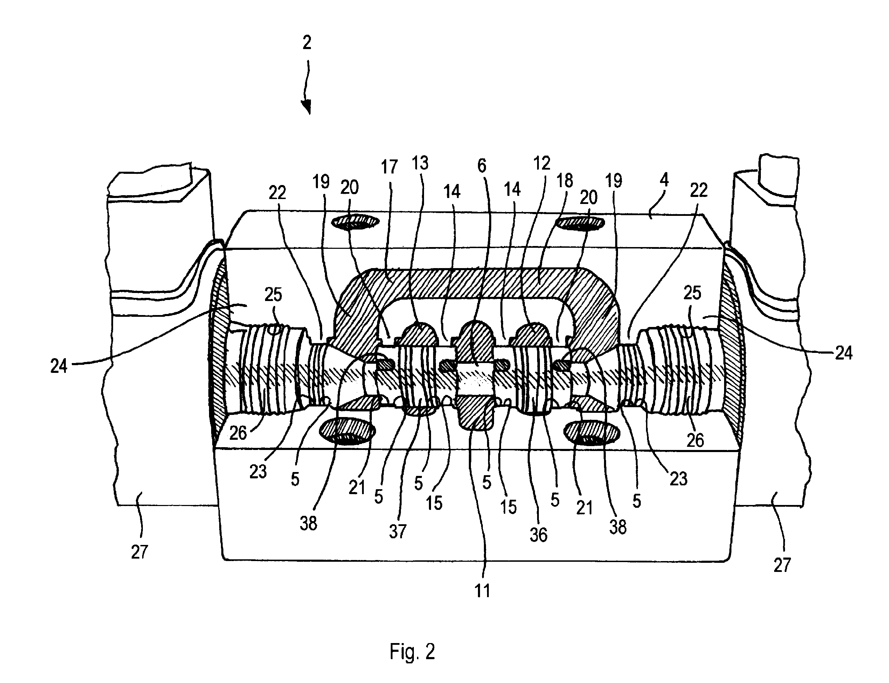

The proportional valve 2 is provided with a valve body comprising a block 4 with an elongated shape inside which there is obtained a seat 5 in which there can slide a cursor 6, as shown in Figure 2.

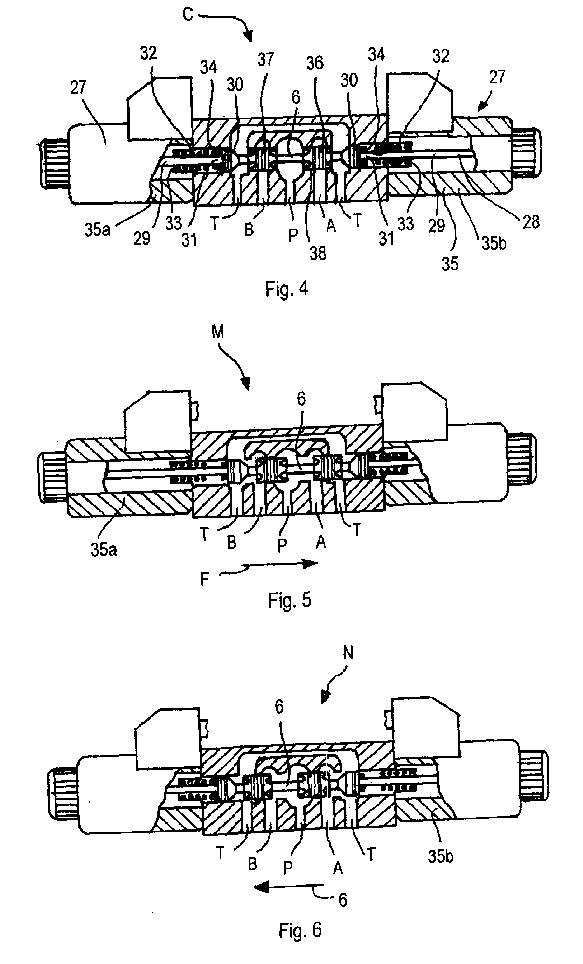

Inside the block 4 there are further obtained a delivery conduit P, a discharge conduit T, a first conduit A and a second conduit B visible in Figures 4 to 7.

Each conduit is provided with a first end leading into a respective connecting port and with a second end leading into a respective open chamber on the seat 5.

There is thus provided a delivery port 7, a discharge port 8, a first port 9 and a second port 10 made respectively at the first end of the delivery conduit P, of the discharge conduit T, of the first conduit A and of the second conduit B.

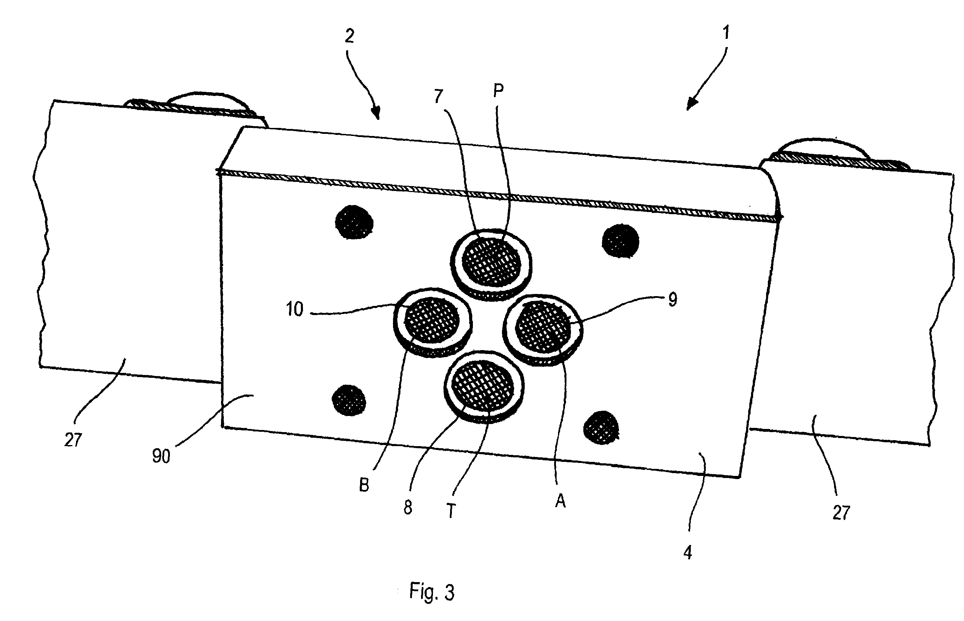

The delivery port 7, the discharge port 8, the first port 9 and the second port 10 face a lower surface 90 of the block 4 as visible in Figure 3 and are arranged for being connected to pipes 91 for conveying pressurised oil that are visible in Figure 1.

The first port 9 and the second port 10 are connected to an actuator or to a hydraulic circuit, for example a dual-action hydraulic cylinder, which is not shown.

The discharge port 8 is arranged for evacuating the pressurised oil with which the proportional valve 2 and the actuator or the hydraulic circuit are supplied.

The second end of the delivery conduit P leads into a central chamber 11 with a substantially annular shape.

The second end of the first conduit A leads into a first lateral chamber 12 with a substantially annular shape.

The second end of the second conduit B leads into a second lateral chamber 13 with a substantially annular shape.

The central chamber 11, the first lateral chamber 12 and the second lateral chamber 13 are mutually placed side by side and are separated by walls 14 provided with circular holes 15.

The circular holes 15 are aligned on one another and form a part of the seat 5.

The second end of the discharge conduit T leads into an external chamber 17 provided with a central portion 18 and with two lateral portions 19, arranged outside the first lateral chamber 12 and the second lateral chamber 13, and separated from the latter by further walls 20 provided with further circular holes 21 aligned with the circular holes 21 and forming a further part of the seat 5.

The two lateral portions 19 are bounded externally by still another two further walls 22 provided with still further circular holes 23 aligned with the circular holes 15 and the further circular holes 21 and forming a still further part of the seat 5.

The block 4 is provided with two end portions 24, each of which is provided with a threaded hole 25 arranged for enabling the block 4 to be connected to a threaded 26 stem of a magnet device 27.

Inside the threaded stem 26 and the magnet device 27 there is obtained a further seat 28 that houses a movable element 29.

An end portion 31 of each movable element 29 is maintained in contact with the cursor 6 by means of the action of a compression spring 32 arranged axially between an abutting surface 33 obtained on the magnet device 27 and a ridge 34 of the movable element 29.

Each magnet device 27 comprises a proportional magnet 35 that, when supplied with direct current, generates an axial thrust force on the movable element 29 directed to the block 4.

In this case the movable element 29 pushes the cursor 6, moving it inside the seat 5.

The cursor 6 is continuously movable in an axial direction.

In particular a first proportional magnet 35a enables the cursor to be moved along a first advance direction F, as shown in Figure 5, whilst a second proportional magnet 35b enables the cursor to be moved along a second advance direction G, as shown in Figure 6, opposite the first advance direction F.

When the proportional magnets 35 are not supplied with electric current, the movable elements 6 are subjected to the force of the springs 32 and the cursor 6 acquires a central position C shown in Figures 2 and 4.

The cursor 6 is provided with a first closing portion 36 and with a second closing portion 37 arranged for occluding the circular holes 15 and the further circular holes 21 when the cursor is in the central position C, as shown in Figure 4.

On the first closing portion 36 and on the second closing portion 37 there is obtained a plurality of grooves 38, arranged in an axial direction and terminating with a circular profile.

In the presence of a movement, even slight, of the cursor 6 in the first advance direction F, the grooves 38 enable a first passage zone to be made with which the delivery conduit P is connected to the first conduit A and a second passage zone to be made with which the second conduit B is connected to the discharge conduit T.

A dimension of the first passage zone and of the second passage zone, and thus a flow of oil passing through the proportional valve 2, increases proportionally to the increase of the movement set by the first proportional magnet 35a on the cursor 6 in the first advance direction F. Similarly, in the presence of even a slight movement of the cursor 6 in the second advance direction G, the grooves enable a further first passage zone to be made with which the delivery conduit P is connected to the second conduit B and a further second passage zone to be made with which the first conduit A is connected to the discharge conduit T.

A further dimension of the further first passage zone and of the further second passage zone, and therefore of a further flow of oil passing through the proportional valve, increases proportionally to the increase of the movement set by the second proportional magnet 35b on the cursor 6 in the second advance direction G.

The size of the set movement depends on the intensity of the direct electric current with which the first proportional magnet 35a or the second proportional magnet 35b are supplied.

The cursor 6 is movable between a first maximum opening position M, shown in Figure 5, corresponding to a maximum movement in the first advance direction F, in which the dimension of the first passage zone and of the second passage zone are maximum, and a second maximum opening position N, shown in Figure 6, corresponding to a further maximum movement in the second advance direction G, in which the further dimension of the further first passage zone and of the further second passage zone are at maximum.

The valve means 1 is connected to an external control device, which is not shown, arranged for providing the control means 3 with an analogue reference signal that controls the proportional valve 2 so as to run a main operating program, by means of a first circuit branch 45.

The external control device may, for example, comprise a dedicated section of a computer program or an electromechanical control operated by an operator.

The valve means 1 is further connected to an external controlling device, which is not shown, arranged for providing the control means 3 with an external enabling signal.

The external controlling device processes one or more feedback signals to check correct operation of the valve means 1 and possibly correct operation of apparatuses connected to the latter.

The external controlling device may comprise a further section of the program dedicated or a manual control that is usable by the operator.

The external controlling device sends the external enabling signal to the control means 3 by means of a second circuit branch 46.

In particular, the external enabling signal is sent to a first safety logic (LS1) 52 of the control means 3, arranged for processing the latter and for generating an external enabling command.

If correct operation of the valve means 1 and of the apparatus is detected, the external enabling signal acquires a determined potential difference value, for example equal to 24 V.

In this manner, the external enabling signal activates the external enabling command by means of the first safety logic (LS1) 52.

If, on the other hand, a fault of the valve means 1 or of the apparatus is detected, the external enabling signal acquires a potential difference value that is different from the determined value, for example equal to 0 V.

In this manner, the external enabling signal disables the external enabling command by means of the first safety logic (LS1) 52.

The control means 3 is provided with open-loop controlling electronics, i.e. the electronics are arranged for controlling the position of the cursor, and therefore of a flow of oil through the proportional valve 2, via a further feedback signal of the direct electric current on the proportional magnets 35.

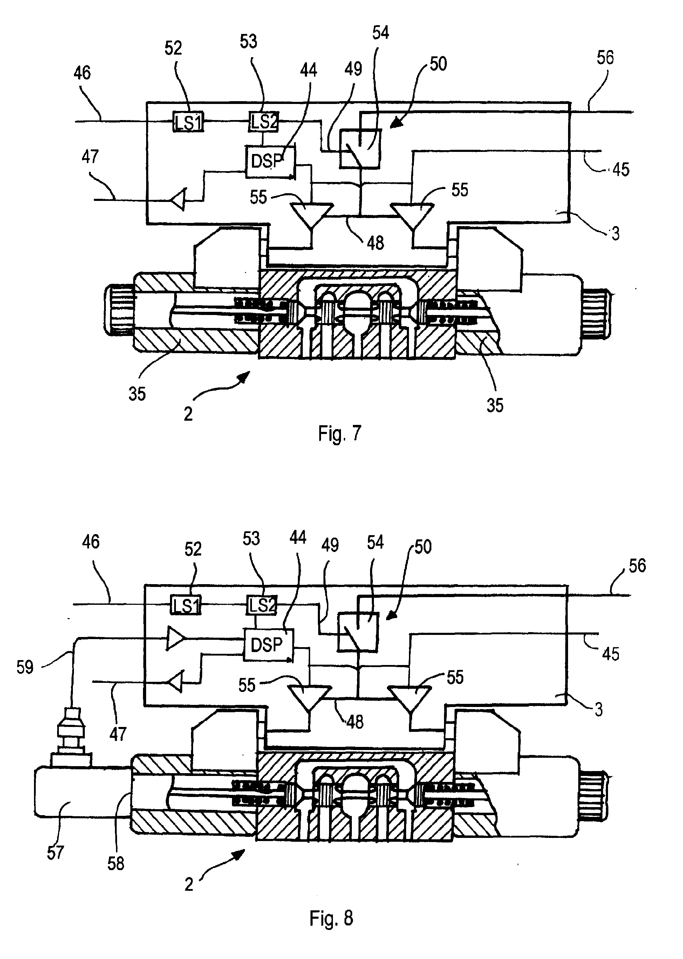

The control means 3, as shown in Figure 7, comprises a processor (DSP) 44 arranged for generating an internal enabling signal according to the feedback signal of the direct electric current on the proportional magnets 35.

The internal enabling signal is sent to a second safety logic (LS2) 53 of the control means 3, arranged for processing the latter for generating an internal enabling command.

If correct operation of the valve means 1 is detected, the internal enabling signal acquires a further determined potential difference value, for example equal to 24 V.

In this manner, the internal enabling signal activates the internal enabling command by means of the second safety logic (LS2) 53.

If, on the other hand, a valve means 1 fault is detected, for example incorrect positioning of the cursor 6 detected by the further feedback signal, the internal enabling signal acquires a potential difference value that is different from the further determined value, for example equal to 0 V.

In this manner, the internal enabling signal disables the internal enabling command by the second safety logic (LS2) 53.

A possible fault in the processor 44 is detected by means of a series of software processes, resident in the processor 44 by a series of controlling circuits, the so-called "watchdogs".

If a processor 44 fault occurs, the external enabling signal acquires a potential difference value that is different from the determined value, thus disabling the external enabling command.

The first safety logic 52 and the second safety logic 53 are arranged in series on the second circuit branch 46 to control, by means of the internal enabling command and the external enabling command, a power circuit 50 arranged for generating a current that is proportional to the analogue reference signal.

The external enabling command and the internal enabling command are sent to the power circuit 50 via a safety circuit branch 49.

The power circuit 50 comprises a power switch 54 arranged for supplying two amplifying devices 55 with an electric current provided by an electric supply line 56 and via a third circuit branch 48.

The amplifying devices 55 are arranged for dispensing the electric current provided by the electric supply line 56 to the magnet devices 27 and for adjusting the latter on the basis of the analogue reference signal.

The amplifying devices 55 dispense the aforesaid electric current to the proportional magnets 35 by corresponding supply branches 90.

The power switch 54 is controlled by the safety circuit branch 49 by the external enabling command and by the internal enabling command.

Until both the external enabling command and the internal enabling command are active the power switch 54 remains switched on, thus enabling the power circuit 50 to supply the two proportional magnets 35.

In this case the proportional valve 2 is controlled on the basis of the analogue reference signal.

In particular, when the analogue reference signal varies with respect to an intended value, for example equal to 0 V, the power circuit 50 generates a current that is proportional to the analogue reference signal, for supplying one of the proportional magnets 35.

If the analogue reference signal is greater than the intended value, and is for example comprised between 0 and 10 V, the first proportional magnet 35a is supplied, if the analogue reference signal is less than the intended value, for example comprised between -10 and 0 V, the second proportional magnet 35b is supplied.

In this manner, one of the two proportional magnets 35 generates an axial thrust force on the movable element 29 and the cursor 6 moves, piloting the flow of pressurised oil that passes through the proportional valve 2.

When the external enabling command or the internal enabling command are deactivated the power switch 54 is switched off, preventing the power circuit 50 from supplying the proportional magnets 35.

In this case the valve 2 switches off and the cursor 6, subject to the force of the springs 32, returns to the central position C.

The amplifying devices 55 are monitored and controlled by the processor 44.

If a fault occurs in the amplifying devices 55, the processor 44 detects this fault and generates an internal enabling signal having a potential difference that is different from the further determined potential difference value.

In this manner the internal enabling command is deactivated and the power switch 54 is switched off to disconnect the proportional valve 2.

The control means 3 comprises further safety circuit means, which is not shown, arranged for monitoring supply sources of electronic components installed on the control means 3, for example the processor 44, the first safety logic (LS1) 52 and the second safety logic (LS2) 53.

These supply sources can be supplying devices such as transformers or supply lines.

If a fault occurs in the aforesaid supply sources, the safety circuit means intervenes independently of the aforesaid electronic components, switches off the power switch 54 and disconnects the valve 2.

The safety circuit means thus further increases the safety of the valve means 1, of the machines to which the latter are connected, of the operators and of the structures that may be present in the vicinity of the machines, ensuring an additional control of the electronic components installed on the control means 3.

The control means 3 further comprises a fourth circuit branch 47 arranged for sending a hazard signal to indicating means that is not shown if the power switch 54 is switched off.

The indicating means is arranged for warning an operator whenever the power switch 54 is switched off.

The indicating means can be an interface computer program for remote control of the valve means 1.

In this case the hazard signal can activate a visual and/or acoustic signal, for example a warning light.

The hazard signal is activated, for example, when an electric signal sent by the fourth circuit branch 47 to the indicating means acquires a value equal to 0 V.

The valve means 1 operates according to a basic safety procedure that is not overridable by an operator.

Alternatively, the operator can use the valve means 1, activating a suitable control of the computer interface program, according to an increased safety procedure.

According to the basic safety procedure, at each startup of the control means 3, the processor 44 checks correct operation of the latter.

If a fault is detected, it interrupts the supply of current to the proportional magnets 35.

If during operation, the processor 44 breaks down or a programmed operation is not run correctly, the supply of current to the proportional magnets 35 is interrupted.

According to the basic safety procedure, if the external enabling command is active during the switch-on of the control means 3, if also the internal enabling command is active, the latter is already ready to supply current to proportional magnets 35.

If during operation the external enabling command is deactivated, the current supply to the proportional magnets 35 is interrupted.

Whenever the supply of current to the proportional magnets 35 is interrupted a hazard signal is emitted to warn the operator.

If the external enabling command is activated again, and if the internal enabling command is also active, the supply to the proportional magnets 35 is restored and the hazard signal is interrupted.

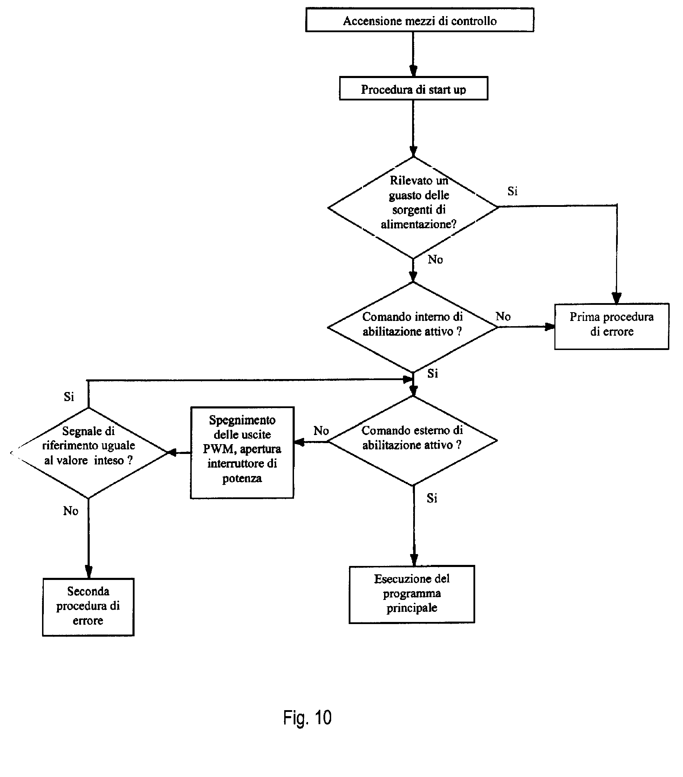

The basic safety procedure is represented by a block diagram in Figure 10.

After startup of the control means 3 a so-called "startup" procedure is run, in which processor 44 checks that operation of the control means 3 is correct.

The safety circuit means controls operation of the supply sources of the electronic components installed on the control means 3.

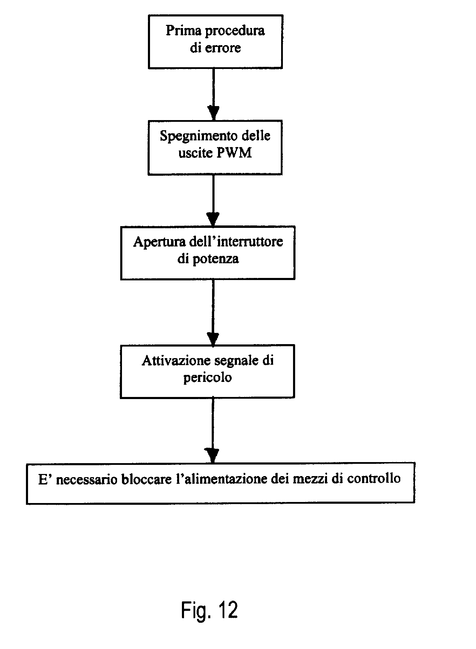

If faults in the aforesaid supply sources are detected a first error procedure shown in Figure 12 is run, otherwise, if no faults are detected, the internal enabling command is examined by the second safety logic 53.

If the internal enabling command is deactivated, the first error procedure is run, otherwise, if the internal enabling command is active, the external enabling command is examined.

If the second safety logic 53 detects that the external enabling command is active, it is possible to run the main program, otherwise, if the external enabling command is absent, PWM outlets of the control means 3 are switched off that are arranged for supplying the proportional magnets 35, the power switch is switched off and the analogue reference signal is examined.

If the analogue reference signal is equal to the intended value the second safety logic 53 again detects a status of the external enabling command, i.e. indicating whether the latter is active or deactivated.

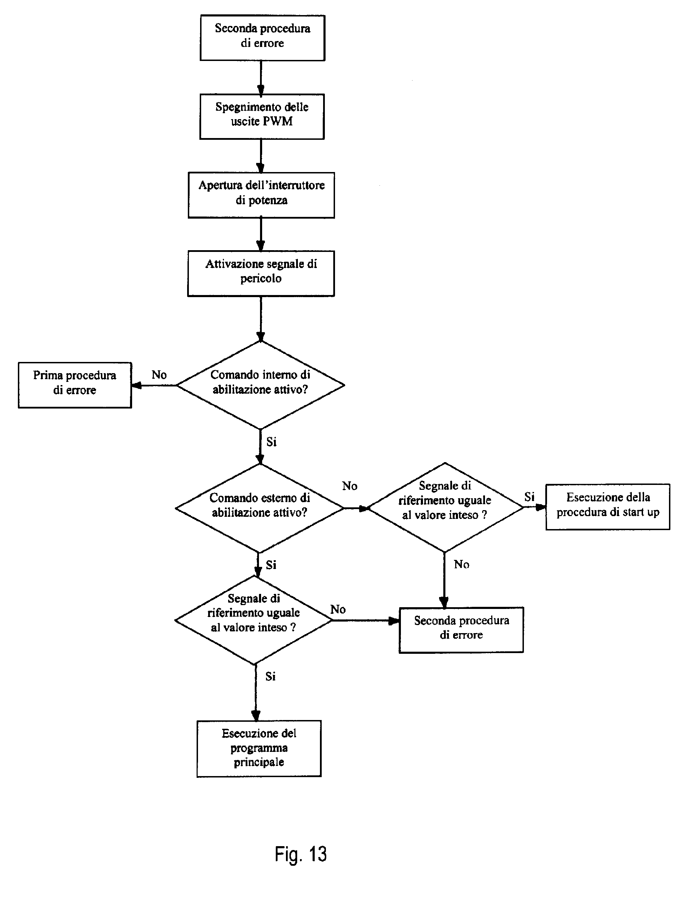

If the analogue reference signal is different from the intended value a second error procedure shown in Figure 13 is run.

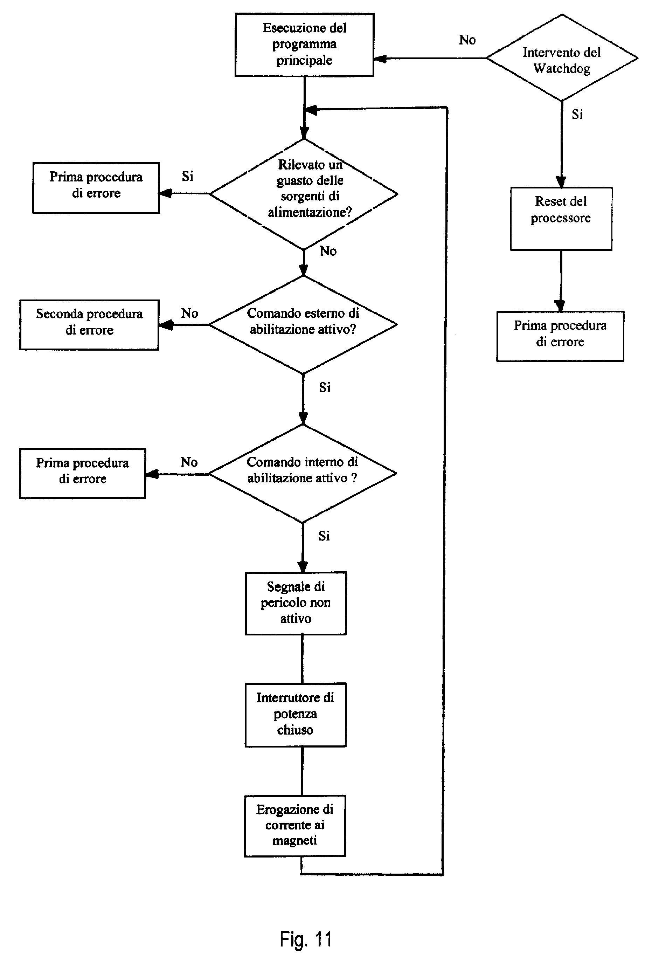

If, during running of the main program, as shown in Figure 11, by means of the control circuits (watchdog), a fault of the control means 3 is detected, the processor 44 is reset and the first error procedure is run.

Otherwise, if the controlling circuits (watchdog) does not detect processor 44 faults, the main program can proceed.

During running of the main program the operation of the supply sources of the electronic components, the status of the external enabling command and the status of the internal enabling command are checked periodically.

If faults in the supply sources are detected the first error procedure is run.

If the external enabling command is absent the second error procedure is run.

If the internal enabling command is absent the first error procedure is run.

If faults to the supply sources are not detected, the external enabling command is active and the internal enabling command is active, the hazard signal is not sent, the power switch 54 is switched on and current is supplied to the proportional magnets 35.

The first error procedure is represented by a block diagram in Figure 12.

The first error procedure switches off the PWM outlets, switches off the power switch 54 and activates the fourth circuit branch 47 to activate the hazard signal.

In order to be able to reactivate the valve means 1 in this condition it is necessary to stop the supply to the control means 3 and then switch on the latter again.

In Figure 13 a block diagram illustrates the second error procedure.

This second error procedure switches off the PWM outlets, switches off the power switch 54 and activates the fourth circuit branch 47 to activate the hazard signal.

Subsequently, the status of the internal enabling command is detected by means of the second safety logic 52.

If the internal enabling command is deactivated the first error procedure is run.

If the internal enabling command is active the status of the external enabling command is detected by means of the second safety logic 53, and subsequently the processor 44 controls the value of the analogue reference signal.

If the external enabling command is deactivated and the value of the analogue reference signal is equal to the intended value, the startup procedure in Figure 10 is run again and the operation of the valve means 1 resumes normally.

If the external enabling command is deactivated and the value of the analogue reference signal is different from the reference value the second error procedure is repeated.

If the external enabling command is active and the value of the analogue reference signal is different from the reference value, the second error procedure is repeated.

If the external enabling command is active and the value of the analogue reference signal is equal to the reference value, the main program is run.

According to the increased safety procedure, when the control means 3 is switched on, before current is supplied to the proportional magnets 35, the external enabling command and the reference signal are controlled.

If the internal enabling command is active, in order to supply current to the proportional magnets 3, the external enabling command has to be initially deactivated and the reference signal has to be initially equal to the intended value.

In this case, when the external enabling command is activated it is possible to supply the proportional magnets 35 varying the reference signal.

If initially the external enabling command is active or the reference signal is different from the intended value, the control means 3 does not supply current to the proportional magnets 35 and indicates the error through the hazard signal.

If during operation the external enabling command is deactivated, this is indicated through a hazard signal and the current supply to the proportional magnets 35 is interrupted.

In order to restore the operation of the proportional valve 2, the reference signal is returned to the intended value and the procedure disclosed above is repeated as if the control means 3 had to be switched on again.

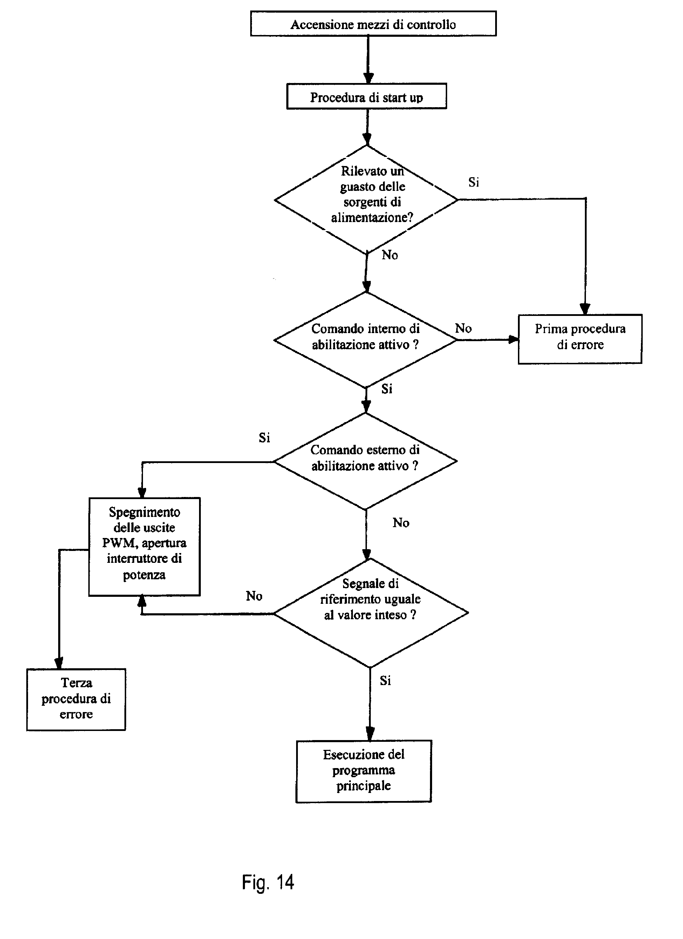

The increased safety procedure is illustrated by a block diagram in Figure 14.

After the control means 3 has been switched on, a startup procedure is run in which the processor 44 checks that operation of the control means 3 is correct.

The safety circuit means controls operation of the supply sources of the electronic components installed on the control means 3.

If faults are detected in the aforesaid supply sources the first error procedure shown in Figure 12 is run, otherwise, if faults are not detected the internal enabling command is examined by the second safety logic 53.

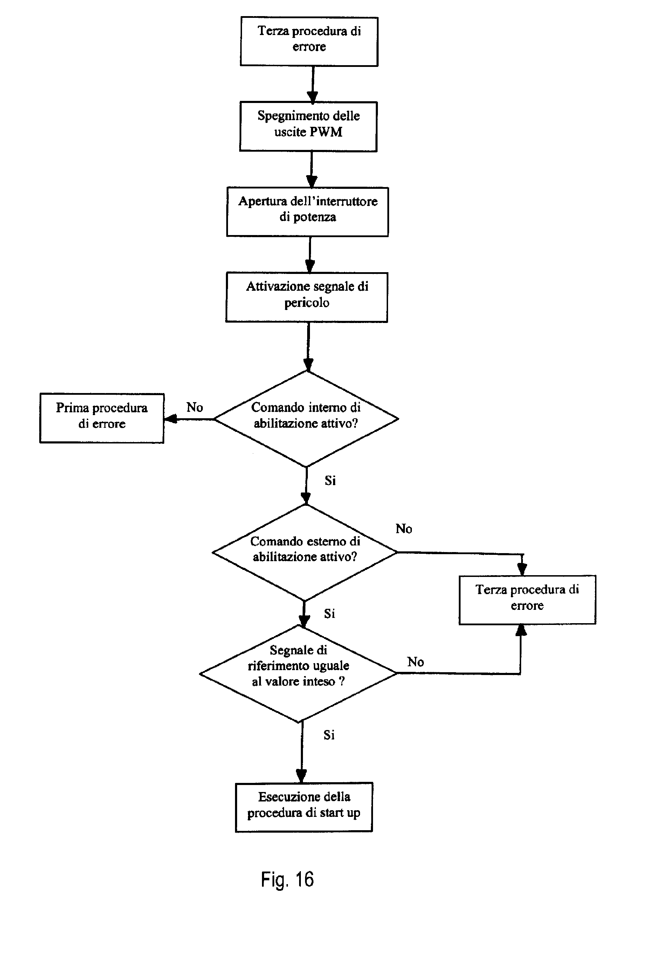

If the internal enabling command is deactivated the first error procedure is run, otherwise, if the internal enabling command is active the external enabling command is examined. If the second safety logic 53 detects that the external enabling command is active, the PWM outlets are switched off, the power switch is switched off and a third error procedure shown in Figure 16 is run.

If the second safety logic 53 detects that the external enabling command is absent the analogue reference signal is examined.

If the analogue reference signal is equal to the intended value it is possible to run a main program, otherwise, the PWM outlets are switched off, the power switch 54 is switched off and the third error procedure is run.

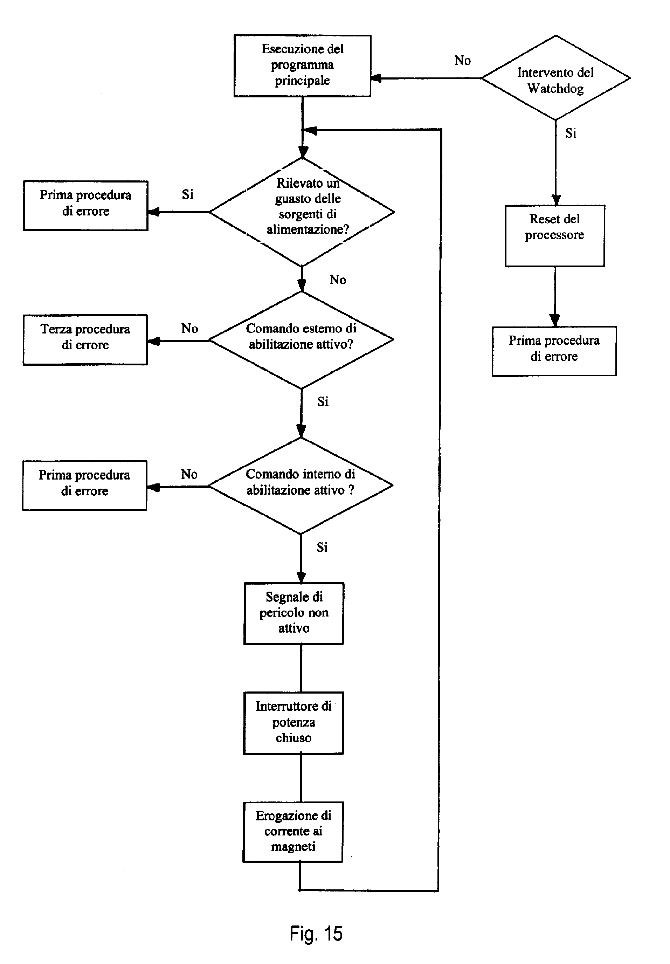

If, during running of the main program, as shown in Figure 15, a control means 3 fault is detected by the controlling circuits (watchdog), the processor 44 is reset and the first error procedure is run.

Otherwise, if the controlling circuits (watchdog) do not detect processor 44 faults, the main program can proceed.

During running of the main program the operation of the supply sources of the electronic components, the status of the external enabling command and the status of the internal enabling command are checked periodically.

If supply sources faults are detected the first error procedure shown in Figure 12 is run.

If the external enabling command is deactivated the third error procedure is run.

If the internal enabling command is deactivated the first error procedure is run.

If faults at the supply sources are not detected, the external enabling command is active and the internal enabling command is active the hazard signal is not sent, the power switch 54 is switched on and current is supplied to the proportional magnets 35.

In Figure 16 the third error procedure is illustrated by a block diagram.

This third error procedure switches off the PWM outlets, switches off the power switch 54 and activates the hazard signal.

Subsequently, the status of the internal enabling command is detected by the second safety logic 53.

If the internal enabling command is deactivated the first error procedure is run.

If the internal enabling command is active the status of the external enabling command is detected by the first safety logic 53.

If the external enabling command is deactivated the third error procedure is repeated.

If the external enabling command is active the processor controls the value of the analogue reference signal.

If the value of the analogue reference signal is different from the intended value the third error procedure is repeated.

If the value of the analogue reference signal is equal to the intended value the startup procedure of Figure 14 is run again.

In Figure 8 there is shown an alternative embodiment of valve means 101 according to the invention. The latter differs from the previously disclosed valve means 1 through the presence of a position sensor 57 fixed to a side surface 58 of the proportional valve 2 and arranged for monitoring the position of the cursor 6 inside the seat 5.

The control means 3 is thus provided with closed-loop controlling electronics, i.e. the electronics are arranged for controlling the position of the cursor and thus an opening of the proportional valve 2 by means of feedback of the position of the cursor 6 rather than by the further feedback signal of the electric direct current on the proportional magnets 35.

A further circuit branch 59 for acquiring a position signal of the cursor 6 emitted by the position sensor 57 is connected to the position sensor 57.

The further circuit branch 59 places the position signal at the disposal of the processor 44.

The other components comprised in the valve means 101 substantially maintain the same operation and the same structure disclosed with reference to the valve means 1.

The position sensor 57 enables positioning of the cursor 5 during operation to be controlled better, to adjust more accurately the flow of oil passing through the proportional valve 2.

In fact, when the analogue reference signal varies with respect to the intended value and the control means 3 supplies one of the magnets 35, to move the cursor 6, the current with which the proportional magnet 35 is supplied increases until the position reached by the cursor 6, measured by the position sensor 57, corresponds to a desired position indicated to the processor 44 by the value of the analogue reference signal.

If the position signal of the cursor 5 is not activated, the control means 3 immediately interrupts the current from both the proportional magnets 35 and the cursor 6 is repositioned mechanically by the springs 32 in the central position C.

The valve means 101 operates according to a further basic safety procedure that is not overridable by an operator.

Alternatively, the operator can use the valve means 1, by activating a suitable computer interface program command, according to a further increased safety procedure.

According to the further basic safety procedure, at each startup of the control means 3, the processor 44 checks that the operation of the latter is correct.

If a fault is detected it interrupts the supply of current to the proportional magnets 35.

If during operation, the processor 44 breaks down or a programmed operation is not run correctly, the supply of current to the proportional magnets 35 is interrupted.

According to the further basic safety procedure, if the external enabling command is active during the switch-on of the control means 3, the latter is already ready to supply current to the proportional magnets 35 if also the internal enabling command is active.

It is possible, if desired, to make the external enabling command always active, for example by using a solderable bridge element that is soldered on the control means 3 so as to provide the external enabling signal with a potential difference value that is constantly equal to the determined value.

If the bridge element is not provided, if during operation the external enabling command is deactivated, the current supply to the proportional magnets 35 is interrupted.

Even if the position signal is not activated, or if the position signal exceeds a maximum threshold value, for example 20mA (10V), or is below a minimum threshold value, for example 4mA (2V), the supply to the proportional magnets 35 is interrupted.

Whenever the supply of current to the proportional magnets 35 is interrupted a hazard signal is emitted to warn the operator.

If the external enabling command is activated again, and if the internal enabling command is also active, the supply to the proportional magnets 35 resumes and the hazard signal is interrupted.

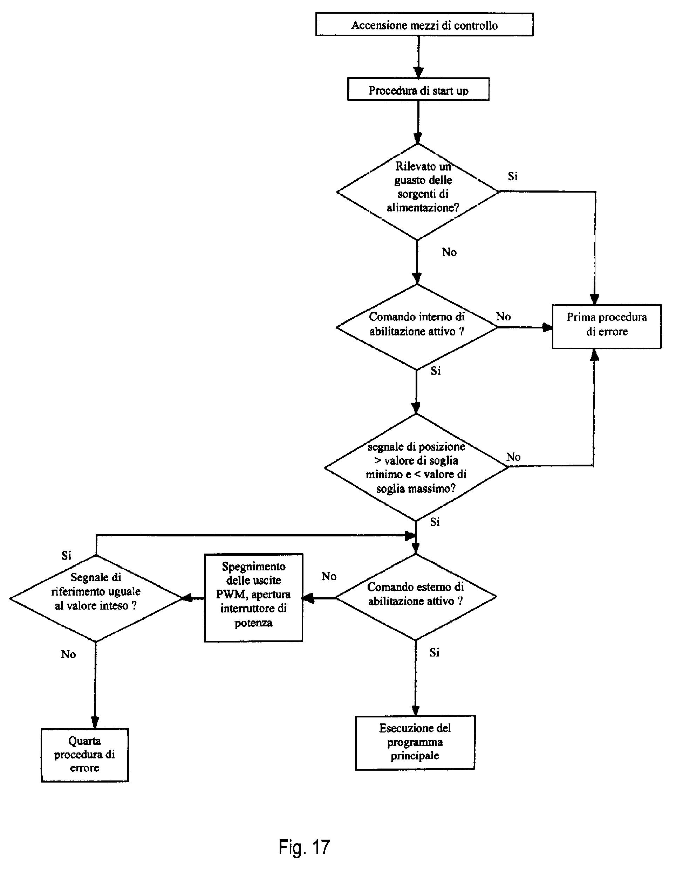

In Figure 17 the further basic safety procedure that is not overrideable is illustrated by a block diagram.

After the control means 3 has been switched on the startup procedure is run, in which the processor 44 checks that the operation of the controlling means 3 is correct.

The safety circuit means controls operation of the supply sources of the electronic components installed on the control means 3.

If faults are detected in the aforesaid supply sources the first error procedure shown in Figure 12 is run, otherwise, if faults are not detected the internal enabling command is examined by the second safety logic 53.

If the internal enabling command is deactivated the first error procedure shown in Figure 12 is run, otherwise, if the internal enabling command is active the position signal of the position sensor 57 is checked.

If the position signal is not comprised between the minimum threshold value and the maximum threshold value the first error procedure is activated.

If the position signal is on the other hand comprised between the minimum threshold value and the maximum threshold value, the status of the external enabling command is checked by means of the second safety logic 53.

If the second safety logic 53 detects that the external enabling command is active it is possible to run a main program, otherwise, if the external enabling command is deactivated, the PWM outlets are switched off, the power switch is switched off and the analogue reference signal is examined.

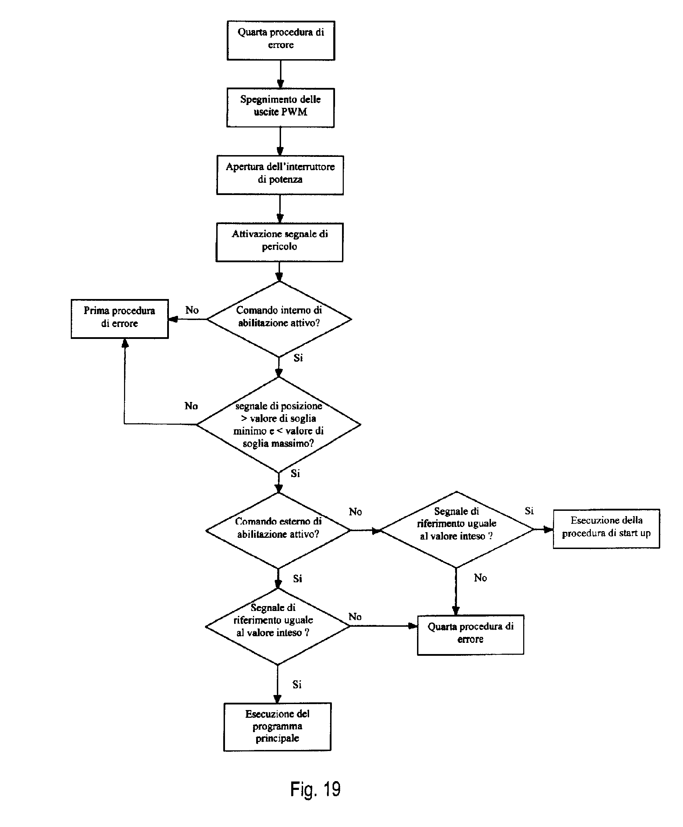

If the analogue reference signal is equal to the intended value, the second safety logic 53 again detects the status of the external enabling command, otherwise a fourth error procedure shown in Figure 19 is run.

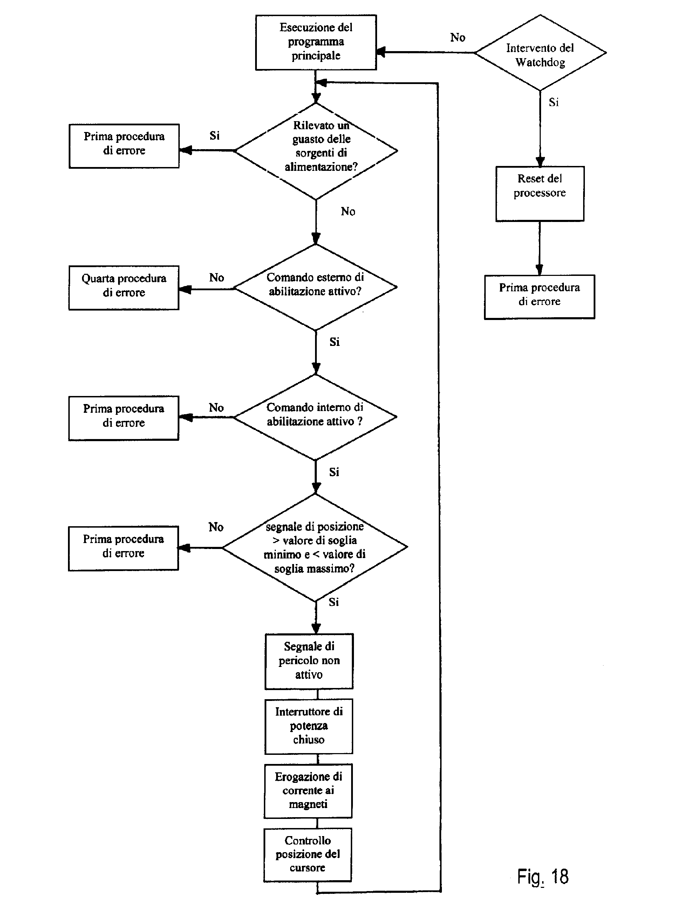

If, during running of the main program, as shown in Figure 18, a control means 3 fault is detected by the controlling circuits (watchdog), the processor 44 is reset and the first error procedure is activated.

Otherwise, if the controlling circuits (watchdog) do not detect processor 44 faults, the main program can proceed.

During running of the main program the operation of the supply sources of the electronic components, the status of the external enabling command and the status of the internal enabling command are checked periodically.

If supply sources faults are detected the first error procedure shown in Figure 12 is run.

If the external enabling command is deactivated the fourth error procedure is run.

If the internal enabling command is deactivated the first error procedure is run.

If the position signal is not comprised between the minimum threshold value and the maximum threshold value the first error procedure is activated.

If faults to the supply sources are not detected, the external enabling command is active, the internal enabling command is active and the position signal is comprised between the minimum threshold value and the maximum threshold value, the hazard signal is not sent, the power switch 54 is switched on, current is supplied to the proportional magnets 35 and the position of the cursor 6 is controlled.

In Figure 19 the fourth error procedure is illustrated by a block diagram.

This fourth error procedure switches off the PWM outlets, switches off the power switch 54 and activates the fourth circuit branch 47 to activate the hazard signal.

Subsequently, is detected, by the second safety logic 53, the status of the internal enabling command.

If the internal enabling command is deactivated the first error procedure is run.

If the internal enabling command is deactivated the position signal of the position sensor 57 is checked.

If the position signal is not comprised between the minimum threshold value and the maximum threshold value the first error procedure is activated.

If the position signal is, on the other hand, comprised between the minimum threshold value and the maximum threshold value, the status of the external enabling command is checked by the second safety logic 53 whilst the processor 44 controls the value of the analogue reference signal.

If the external enabling command is deactivated and the value of the analogue reference signal is equal to the intended value, the startup procedure of Figure 17 is run again and the valve means resumes operation normally.

If the external enabling command is deactivated and the value of the analogue reference signal is different from the intended value, the fourth error procedure is repeated.

If the external enabling command is active and the value of the analogue reference signal is different from the intended value, the fourth error procedure is repeated.

If the external enabling command is active and the value of the analogue reference signal is equal to the determined value, the main program is run.

According to the further enhanced safety procedure, when the control means 3 is switched on, before current is supplied to the proportional magnets 35, the external enabling command and the reference signal and the position of the cursor 6 are checked.

If the internal enabling command is active, in order to supply current to the proportional magnets 3, the external enabling command has to be initially deactivated, the reference signal has to be initially equal to the intended value and the cursor 6 has to occupy a safety position in the embodiment disclosed in the central position C.

In this case, when the external enabling command is activated it is possible to supply the proportional magnets 35 varying the reference signal.

If initially the external enabling command is active or the reference signal is different from the intended value or the cursor 6 is not in the safety position, the control means 3 does not supply current to the proportional magnets 35 and indicates the error by means of the hazard signal.

If during operation the external enabling command is deactivated, this is indicated by the hazard signal and the current supply to the proportional magnets 35 is interrupted.

In order to restore the operation of the proportional valve 2, it is necessary to deactivate the external enabling command, return the reference signal to the intended value and the cursor 6 to the safety position and rerun the procedure disclosed above as if the control means 3 had to be switched on.

If during operation the external enabling command is deactivated, this is indicated by the hazard signal and the current supply to the proportional magnets 35 is interrupted.

In order to restore the operation of the proportional valve 2, it is necessary to repeat the procedure disclosed above as if the control means 3 had to be switched on.

Also if the position signal of the position sensor is not activated or if the position signal of the position sensor exceeds the maximum threshold or is less than the minimum threshold the supply to the proportional magnets 35 is interrupted and this is indicated by the hazard signal.

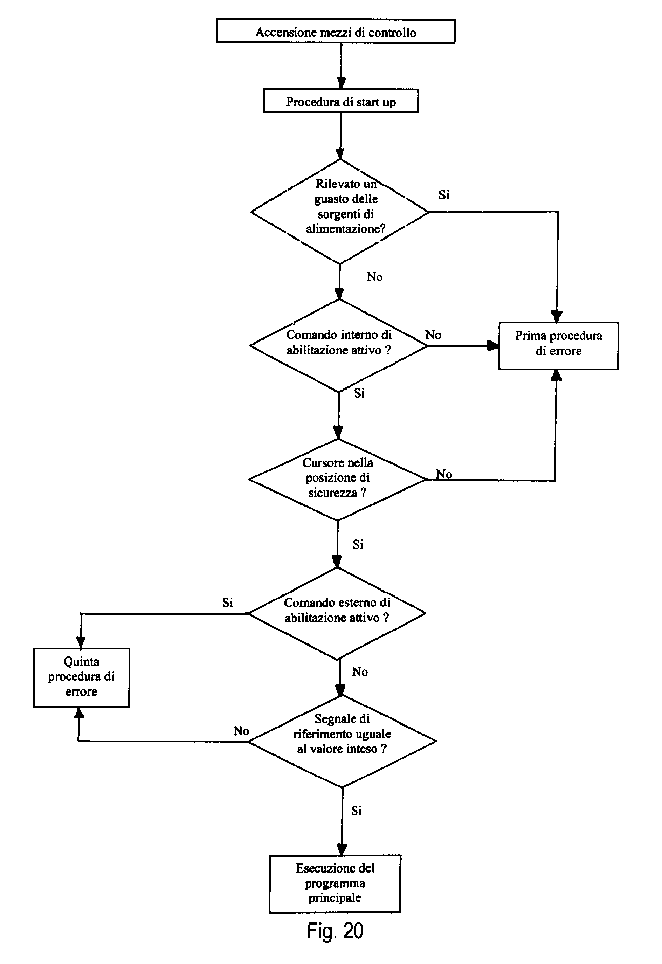

In Figure 20 the further increased safety procedure is illustrated by a block diagram.

After the control means 3 is switched on the startup procedure is run, in which the processor 44 checks correct operation of the control means 3.

The safety circuit means controls operation of the supply sources of the electronic components installed on the control means 3.

If faults are detected in the aforesaid supply sources the first error procedure shown in Figure 12 is run, otherwise, if faults are not detected the internal enabling command is examined by the second safety logic 53.

If the internal enabling command is deactivated the first error procedure shown in Figure 12 is run, otherwise, the position signal of the position sensor 57 is checked.

If the position signal is not a signal corresponding to the safety position of the cursor 6 the first error procedure is activated.

If the position signal is, on the other hand, the signal corresponding to the safety position of the cursor 6, the status of the external enabling command is checked by the second safety logic 53.

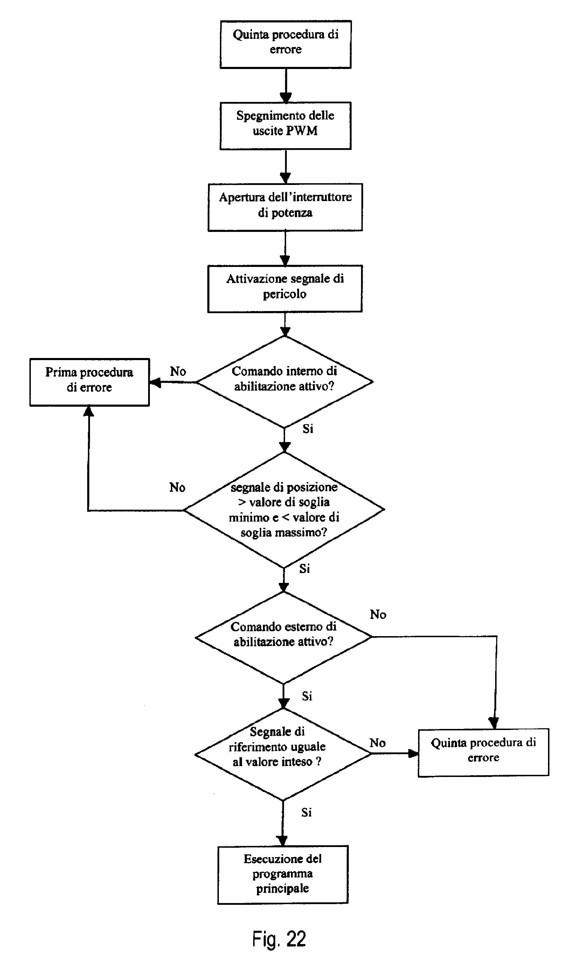

If the second safety logic 53 detects that the external enabling command is active, a fifth error procedure shown in Figure 22 is run.

If the second safety logic 53 detects that the external enabling command is absent the analogue reference signal is examined.

If the analogue reference signal is equal to the intended value it is possible to run the main program, otherwise, the fifth error procedure is run.

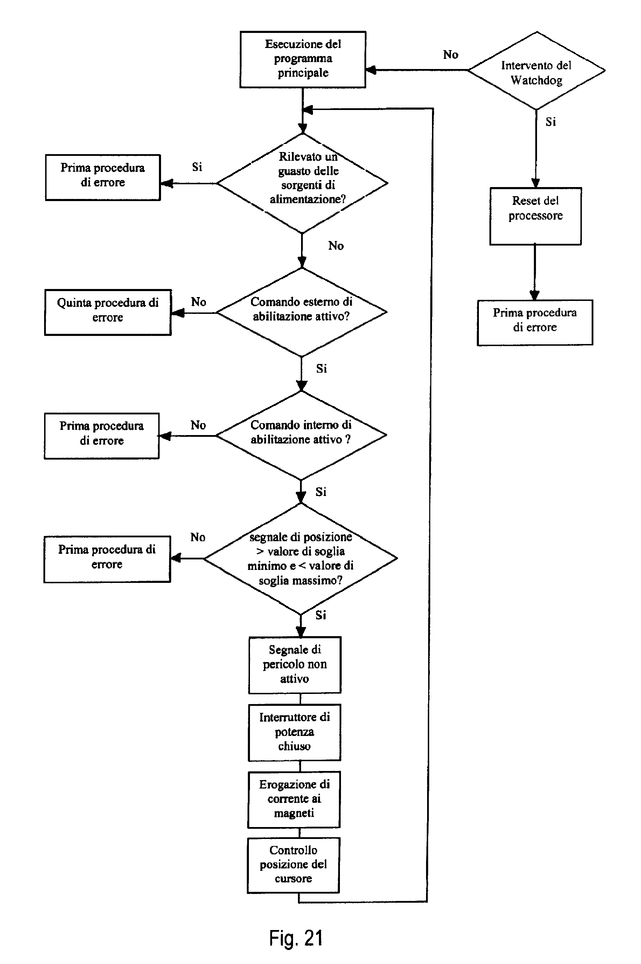

If, during running of the main program, as shown in Figure 21, a control means 3 fault is detected by the controlling circuits (watchdog), the processor 44 is reset and the first error procedure is run.

Otherwise, if the controlling circuits (watchdog) do not detect processor 44 faults, the main program can proceed.

During running of the main program the operation of the supply sources of the electronic components, the status of the external enabling command and the status of the internal enabling command are checked periodically.

If supply sources faults are detected, the first error procedure is run.

If the external enabling command is deactivated the fifth error procedure is run.

If the internal enabling command is deactivated the first error procedure is run.

If the position signal is not comprised between a minimum threshold value and a maximum threshold value the first error procedure is activated.

If faults to the supply sources are not detected, the external enabling command is active, the internal enabling command is active and the position signal is comprised between the minimum threshold value and the maximum threshold value, current is supplied to the proportional magnets 35 and the position of the cursor 6 is checked.

In Figure 22 the fifth error procedure is illustrated by a block diagram.

The fifth error procedure switches off the PWM outlets, switches off the power switch 54 and activates the fourth circuit branch 47 to activate the hazard signal.

Subsequently, the status of the internal enabling command is detected by the second safety logic 53.

If the internal enabling command is not active the first error procedure is run.

If the internal enabling command is active the position signal is checked.

If the position signal is not comprised between the maximum threshold value and the minimum threshold value the first error procedure is activated.

If the position signal is comprised between the maximum threshold value and minimum threshold value the status of the external enabling command is detected by the first safety logic 53.

If the external enabling command is deactivated the fifth error procedure is repeated.

If the external enabling command is active the processor checks the value of the analogue reference signal.

If the value of the analogue reference signal is different from the intended value the fifth error procedure is repeated.

If the value of the analogue reference signal is equal to the intended value the main program is run.

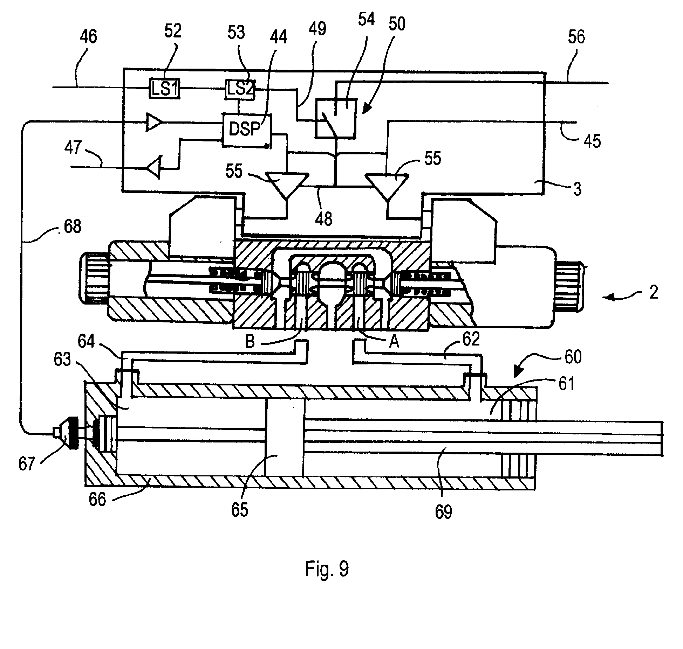

In Figure 9 there is shown a further alternative embodiment of valve means 201 according to the invention.

The latter differs from the valve means 1 as it further comprises a dual-action cylinder 60, a first chamber 61 of which is maintained by means of a first connecting conduit 62 at the same pressure as the first conduit A, and a second chamber 63 of which is maintained by a second connecting conduit 64 at the same pressure as the second conduit B.

The dual-action cylinder 60 is provided with a piston 65 fixed to a stem 69, slidable longitudinally with respect to a cylinder 66, separating the first chamber 61 from the second camera 63, and with a further position sensor 67 arranged for monitoring the position of the piston 65 inside the cylinder 66.

The control means 3 is therefore provided with controlling electronics for controlling the cylinder position, i.e. it is arranged for controlling the position of the cursor 6 and therefore an opening of the proportional valve 2 by means of feedback of the position of the stem 69 inside the dual-action cylinder 60.

A still further circuit branch 68 is connected to the further position sensor 67 to acquire a further position signal of the stem 69 emitted by the further position sensor 67.

The still further circuit branch 68 places the further position signal of the stem 69 at the disposal of the processor 44.

The other components comprised in the valve means 201 substantially maintain the same operation and the same structure as are disclosed above with reference to the valve means 1.

The further position sensor 67 enables the position of the stem 69 during operation to be known, to adjust with greater accuracy the flow of oil that passes through the proportional valve 2.

Each value of the analogue reference signal corresponds to a corresponding desired position of the stem 69.

The control means 3 detects, via the further position sensor 67, a real position of the stem 69 and compares the real position of the stem 69 with the desired position indicated by the analogue reference signal.

In the presence of a possible difference between the real position and the desired position, the control means 3 supplies one of the two proportional magnets 35 so as to take the stem to the corresponding desired position, thus adjusting the flow of oil that passes through the proportional valve 2.

If the further position signal of the stem 69 is not activated, for example owing to a fault in the further position sensor 69 or through laceration of the still further circuit branch 68, the control means 3 immediately interrupts the supply of current to the proportional magnets 35.

Even if the further position signal is not comprised in an interval comprised between a minimum safety value and a maximum safety value, set by the operator, the control means 3 immediately interrupts the supply to both the proportional magnets 35 and the cursor 6 is repositioned in the central position C by means of the mechanical action of the springs 32 and the piston 65 stops the stroke thereof.

The valve means 201 operates according to a still further basic safety procedure that is not overrideable.

According to this procedure, if the processor 44 detects incorrect operation of the control means 3, the supply of current to the proportional magnets 35 is interrupted and a fault is indicated to the operator by the hazard signal.

Further, if the external enabling command is activated during the switch-on of the control means 3, the latter is ready to supply current to the proportional magnets 35 in the presence of the internal enabling command.

It is also possible, if desired, to make the external enabling command always active, for example by using a solderable bridge element that is soldered on the control means 3 so as to provide the external enabling signal with a potential difference value that is constantly equal to the determined value.

If during operation the external enabling command is deactivated, this is indicated by the hazard signal and the current supply to the proportional magnets 35 is interrupted until the external enabling command is activated again and the hazard signal is interrupted.

If the feedback signal of the further sensor is not activated, sensor that measures the position of the stem, this is indicated by the hazard signal and the supply of current to the proportional magnets 35 is suspended.

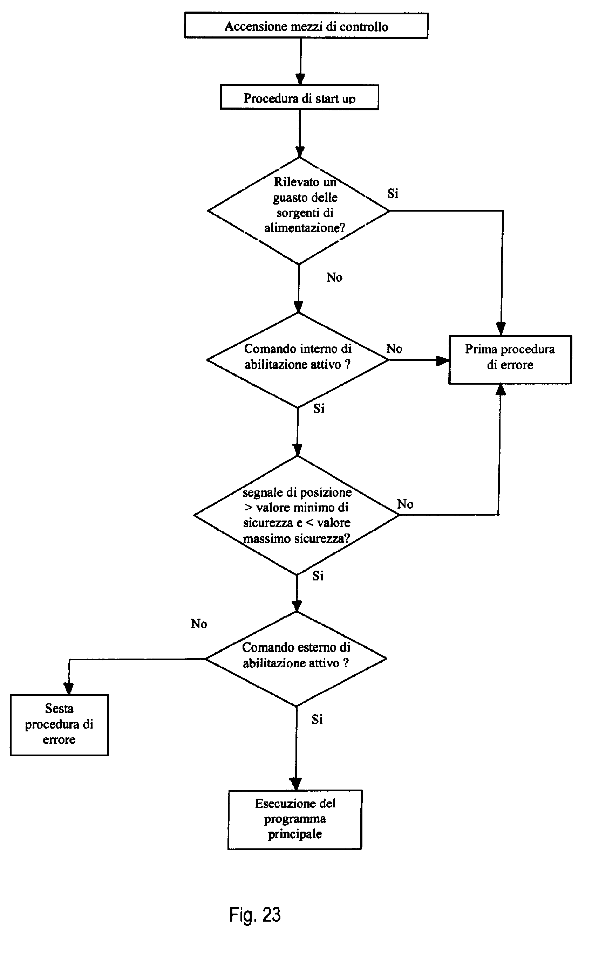

In Figure 23 the further basic safety procedure that is not overrideable is illustrated by a block diagram.

After the control means 3 has been switched on the startup procedure is run, in which the processor 44 tests correct operation of the control means 3.

The safety circuit means controls operation of the supply sources of the electronic components installed on the control means 3.

If faults are detected in the aforesaid supply sources the first error procedure shown in Figure 12 is run, otherwise, if faults are not detected the internal enabling command is examined by the second safety logic 53.

If the internal enabling command is deactivated the first error procedure is run, otherwise, if the internal enabling command is active the further position signal of the further position sensor 67 is checked.

If the further position signal is not comprised between the minimum safety value and the maximum safety value the first error procedure is activated.

If the position signal is, on the other hand, comprised between the minimum safety value and the maximum safety value, the status of the external enabling command is checked by the second safety logic 53.

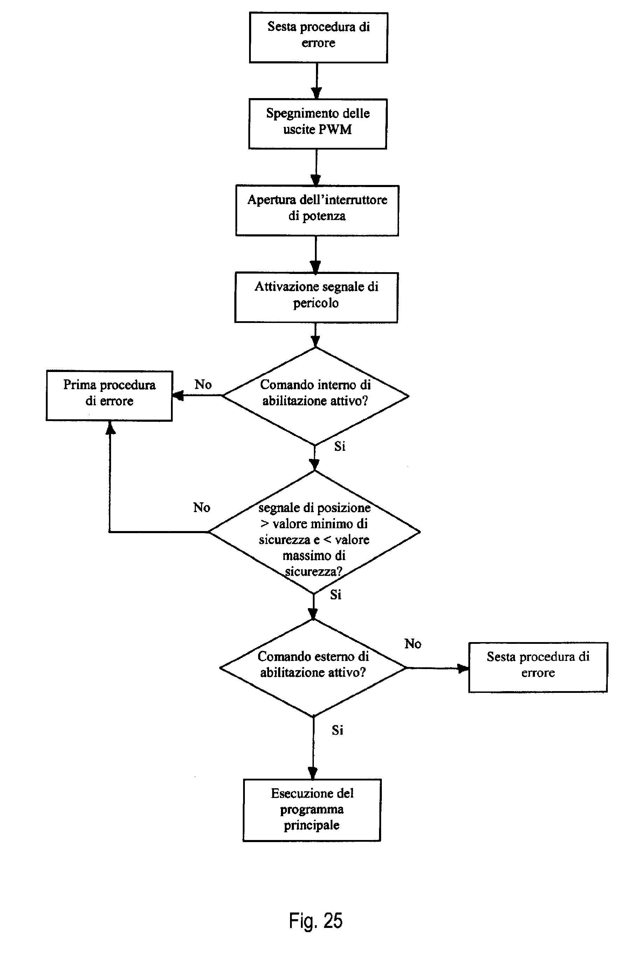

If the second safety logic 53 detects that the external enabling command is active it is possible to run a main program, otherwise, if the external enabling command is deactivated, a sixth error procedure shown in Figure 25 is run.

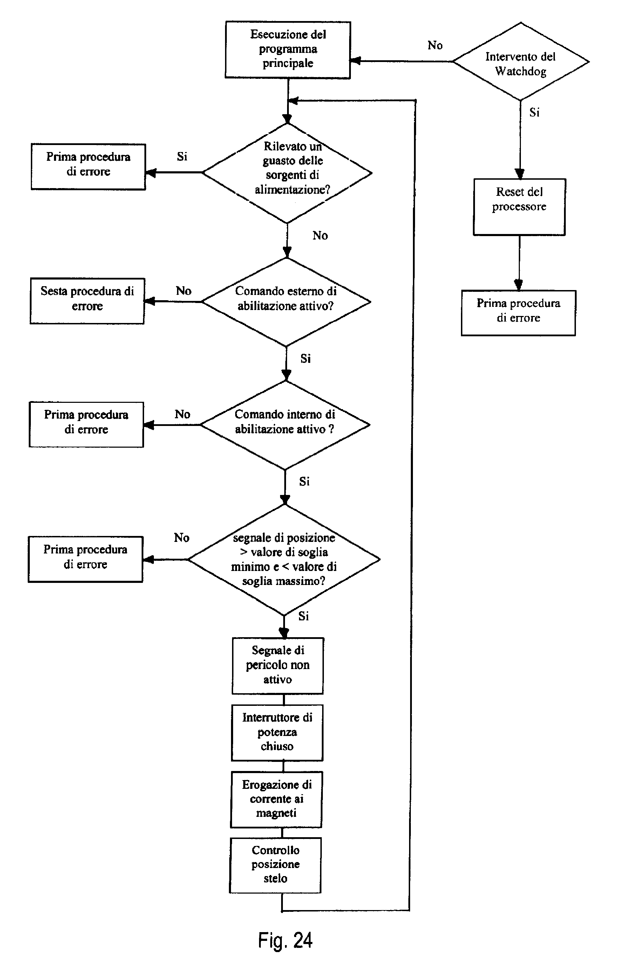

If, during running of the main program, as shown in Figure 24, by means of the control circuits (watchdog), a fault of the control means 3 is detected, the processor 44 is reset and the first error procedure is run.

Otherwise, if the controlling circuits (watchdog) does not detect processor 44 faults, the main program can proceed.

During running of the main program the operation of the supply sources of the electronic components, the status of the external enabling command and the status of the internal enabling command are checked periodically.

If supply sources faults are detected the first error procedure is run.

If the external enabling command is absent the sixth error procedure is run.

If the internal enabling command is not activated the first error procedure is run.

If the feedback signal is not comprised between the minimum safety value and the maximum safety value the first error procedure is activated.

If faults in the supply sources are not detected, the external enabling command is active, the internal enabling command is active and the feedback signal is comprised between the minimum safety value and the maximum safety value, current is supplied to the proportional magnets 35 and the position of the stem 69 is checked.

In Figure 25 the sixth error procedure is illustrated by a block diagram.

This sixth error procedure switches off the PWM outlets, switches off the power switch 54 and activates the fourth circuit branch 47 to activate the hazard signal.

Subsequently, the status of the internal enabling command is detected by the second safety logic 53.

If the internal enabling command is absent the first error procedure is run.

If the internal enabling command is active the further position signal of the further position sensor 67 is checked.

If the further position signal is not comprised between the minimum safety value and the maximum safety value the first error procedure is activated.

If the feedback signal is, on the other hand, comprised between the minimum safety value and the maximum safety value, the status of the external enabling command is checked by the second safety logic 53.

If the external enabling command is absent the sixth error procedure is repeated.

If the external enabling command is active the main program is run.

Once the supply to the proportional magnets 35 is interrupted in the valve means 1, 101, 201 the cursor is pushed by the springs 32 and acquires the central position C shown in Figures 2 and 4.

The valve means 1, 101, 201 can also be made so as to take the cursor to suitably chosen positions that are different from the central position C when the supply to the proportional magnets 35 is interrupted.

In this manner, for example, the first passage zone and the second passage zone or the further first passage zone and the further second passage zone can be maintained open to obtain a flow of oil that is suitable for increasing the safety of the proportional valves.

The procedures disclosed above and shown in Figures 10 to 25 enable the operation of the electronic components used in the control means 3 to be optimised and a response speed of the valve means 1 to be thus optimised.

In order to further increase the response speed of the valve means 1, the proportional magnets 35 are designed so as to have suitable electromagnetic properties.

The aforesaid electromagnetic properties enable the operation of the proportional magnets 35 to be integrated in an optimal manner with the operation of the control means 3.

In this manner the valve means 1 enable the flow of pressurised oil that passes through the proportional valve 2 to be regulated with great precision, making the latter suitable for a large number of applications.

## Claims

1. Valve means comprising cursor means (6) arranged for directing suitably a flow of a fluid material, proportional magnet means (35, 35a, 35b) arranged for moving said cursor means (6), electronic control means (3) for supplying said magnet means (35, 35a, 35b), **characterised in that** said electronic control means (3) comprises switch means (54) arranged for blocking a supply of said magnet means (35, 35a, 35b).

2. Valve means according to claim 1, wherein said electronic control means (3) comprises enabling means (46, 49, 52, 53) arranged for controlling said switch means (54) during operation of said valve means (1).

3. Valve means according to claim 2, wherein said enabling means (46, 49, 52, 53) comprises first safety logic means (52) arranged for switching off said switch means (54) in the absence of an external enabling command.

4. Valve means according to claim 3, wherein said external enabling command is generated by external control means arranged for controlling said operation of said valve means (1) and possibly a further operation of an apparatus connected to said valve means (1).

5. Valve means according to any one of claims 2 to 4, wherein said enabling means (46, 49, 52, 53) comprises second safety logic means (53) arranged for switching off said switch means (54) in the absence of an internal enabling command.

6. Valve means according to claim 5, wherein said internal enabling command is generated by processor means (44), comprised in said electronic control means (3), arranged for controlling said operation of said valve means (1).

7. Valve means according to claim 6, wherein said processor means (44) comprises control circuit means arranged for controlling still further operation of said electronic control means (3).

8. Valve means according to claim 6 or 7, wherein said processor means (44) is connected to a circuit acquisition branch (45) arranged for acquiring a reference analogue signal arranged for controlling said magnet means (55).

9. Valve means according to any one of claims 6 to 8, wherein said processor means (44) is connected to a signalling circuit branch (47) arranged for indicating a switching off of said switch means (54).

10. Valve means according to any one of claims 5 to 9, as claim 5 is appended to claim 3 or 4, wherein said enabling means (46, 49, 52, 53) comprises a safety circuit branch (49) arranged for connecting said first safety logic means (52) and said second safety logic means (53) to said switch means (54).

11. Valve means according to claim 10 wherein said first safety logic means (52) and said second safety logic means (53) are arranged in series on said safety circuit branch (49).

12. Valve means according to any preceding claim, wherein electronic control means (3) comprises safety circuit means arranged for monitoring supplying devices suitable for supplying said electronic control means (3).

13. Valve means according to any one of claims 6 to 11, or to claim 12 as appended to any one of claims 6 to 11, wherein said processor means (44) is connected to a circuit branch (59) for acquiring a position signal in relation to a position of said cursor means (6).

14. Valve means according to claim 13, and further comprising position sensor means (57) arranged for detecting said position of said cursor means (6) and sending, via said circuit branch (59), said position signal to said electronic control means (3).

15. Valve means according to any one of claims 1 to 12, connected to cylinder means (60) driven by said flow of fluid material.

16. Valve means according to claim 15, as claim 14 is appended to any one of claims 6 to 12, wherein said processor means (44) is connected to a circuit branch (59) for acquiring a position signal in relation to a position of a movable part (65, 69) of said cylinder means (60).

17. Valve means according to claim 16, and further comprising position sensor means (67) arranged for detecting said position of said movable part (65, 69) and sending, via said circuit branch (68), said position signal to said electronic control means (3).

18. Method for supplying magnet means, said magnet means (35, 35a, 35b) being comprised in valve means (1), comprising processing an external enabling signal, **characterised in that** it further comprises further processing an internal enabling signal, said internal enabling signal being generated by said valve means (1).

19. Method according to claim 18 wherein said supplying comprises controlling switch means (54), by electronic control means (3), to provide electric power to said magnet means (35, 35a, 35b).

20. Method according to claim 19, wherein said processing comprises activating, by first safety logic means(52) of electronic control means (3), an external enabling command if said external enabling signal acquires a determined potential difference value.

21. Method according to claim 19 or 20, wherein said further processing further comprises activating, by second safety logic means (53) of said electronic control means (3), an internal enabling command if said internal enabling signal acquires a further determined potential difference value.

22. Method according to claim 20 or 21, wherein said controlling comprises switching off said switch means (54) in the absence of said activating or of said further activating, to suspend said providing.

23. Method according to any one of claims 19 to 22, and further comprising monitoring supplying devices suitable for further supplying said electronic control means (3).

24. Method according to claim 23 and comprising switching off said switch means (54) if said monitoring has detected a fault of said supplying devices, for interrupting said supplying.

25. Method according to claim 22 or 24, and comprising emitting a hazard signal after said switching off.

26. Method according to any one of claims 19 to 25, wherein said providing comprises modulating an electric supply current with which said magnet means (35, 35a, 35b) is supplied by an external reference signal.

27. Method according to claim 26, and further comprising comparing, by electronic control means (3), a feedback signal indicating a position of cursor means (6) of said valve means (1), with said external reference signal to check correct positioning of said cursor means (6).

28. Method according to claim 27, and further comprising acquiring said feedback signal from feedback of said electric supply current.

29. Method according to claim 27, and further comprising acquiring said feedback signal by means of a position sensor (57) arranged for detecting the position of said cursor means (6).

30. Method according to claim 27, and further comprising acquiring said feedback signal by detecting a position of a movable part (65, 69) of cylinder means (60) driven by said valve means (1).

31. Method according to any one of claims 19 to 30, and further comprising controlling by control circuit means an operation of said electronic control means (3) to check for correct operation of said electronic control means (3).

32. Method according to any one of claims 27 to 30, or according to claim 31 as appended to any one of claims 27 to 30, and further comprising generating said internal enabling signal after said comparing and said controlling.

33. Method according to claim 32, wherein said generating comprises conferring to said internal enabling signal said further determined potential difference value if said positioning has been checked and said correct operation has been ascertained.

34. Information technology product loadable into the memory of a computer and comprising software code portions to implement the method according to any one of claims 18 to 33, when said product is run on a computer.

35. Information technology support comprising software code portions to implement the method according to any one of claims 18 to 33.
